# FASCICULE DE BREVET EUROPEEN

(11) **EP 2 486 262 B1**
(45) Date de publication et mention de la délivrance du brevet: **26.06.2013**
(21) Numéro de dépôt: 10776769.1
(22) Date de dépôt: 30.09.2010
(51) Int. Cl.: F02C 9/26, F02C 9/30, F02C 7/236

(54) **CIRCUIT D'ALIMENTATION EN CARBURANT D'UN MOTEUR D'AERONEF**
SCHALTUNG ZUR ZUFÜHRUNG VON KRAFTSTOFF AN EIN FLUGZEUGTRIEBWERK
CIRCUIT FOR SUPPLYING FUEL TO AN AIRCRAFT ENGINE

(30) Priorité: 06.10.2009 FR 0956950
(43) Date de publication de la demande: 15.08.2012
(73) Titulaire: SNECMA, 75015 Paris (FR)
(72) Inventeur: BADER, Nicolas, Alain, F-77000 Vaux Le Penil (FR); DELDALLE, Régis, Michel, Paul, F-77170 Servon (FR); HODINOT, Laurent, Gilbert, Yves, F-77240 Cesson (FR); POTEL, Nicolas, F-94700 Maisons Alfort (FR)
(74) Mandataire: Boura, Olivier
(86) Numéro de dépôt international: PCT/FR2010/052063
(87) Numéro de publication internationale: WO 2011/042641

(56) Documents cités:
- EP-A1- 1 557 546
- EP-A2- 1 715 161
- WO-A2-2007/044020
- FR-A1- 2 764 336
- GB-A- 1 439 764
- US-A- 5 463 863
- US-A1- 2008 028 742

## Description

### Arrière-plan de l'invention

L'invention concerne un circuit d'alimentation en carburant d'un moteur d'aéronef, et plus particulièrement un circuit délivrant du carburant pour l'alimentation d'injecteurs de chambre de combustion du moteur et éventuellement pour l'utilisation comme fluide hydraulique pour la commande d'actionneurs de géométries variables du moteur.

Le plus souvent, un circuit d'alimentation en carburant d'un moteur d'aéronef comprend un système de pompage constitué d'une pompe basse pression associée à une pompe haute pression. La pompe haute pression se présente généralement sous forme d'une pompe volumétrique à engrenages dont la cylindrée est fixe et qui est entraînée par le moteur via une boîte de transmission ou boîte de relais d'accessoires (ou encore AGB pour « Accessories Gear Box »). Cette pompe a pour fonction de délivrer du carburant sous haute pression vers les injecteurs de chambre de combustion et les actionneurs de géométries variables du moteur.

Dans certains circuits d'alimentation en carburant, la pompe haute pression est à double étage, c'est-à-dire qu'elle présente deux étages différents d'engrenages qui sont entraînés simultanément par le moteur selon des lois de cylindrée différentes. Avec ce type de pompe, l'un des étages est spécifiquement dédié à l'alimentation des injecteurs de chambre de combustion, tandis que l'autre est dédié à l'alimentation des actionneurs de géométries variables du moteur.

Quelque soit la configuration choisie pour la pompe haute pression, le débit de carburant délivré n'est pas adapté aux besoins réels du moteur et excède celui-ci sur une large plage de régime de rotation du moteur. Le débit de carburant non consommé par le circuit de carburant lors de ces régimes de rotation du moteur est alors recirculé en amont de la pompe haute pression.

Or, cette recirculation forcée du carburant induit, d'une part un prélèvement mécanique pour l'entraînement de la pompe haute pression qui est non utilisé pour la poussée du moteur, et d'autre part un échauffement du carburant. Cet échauffement du carburant impacte la thermique globale du moteur car le carburant est le fluide « froid » tandis que l'huile est le fluide « chaud ». Aussi, la capacité de refroidissement par le carburant sera plus faible de sorte que la dissipation thermique doit s'effectuer dans l'air au moyen d'échangeurs thermiques air/huile mais au détriment de leur masse leur installation et leur traînée.

EP 1715161 A2 décrit un système d'alimentation en carburant de l'état de la technique

### Objet et résumé de l'invention

La présente invention a donc pour but principal de pallier de tels inconvénients en proposant un circuit d'alimentation en carburant d'un moteur d'aéronef permettant, de façon simple et fiable, de délivrer un débit de carburant vers les injecteurs de chambre de combustion et les actionneurs de géométries variables du moteur avec des lois de cylindrée différentes.

Ce but est atteint grâce à un circuit d'alimentation en carburant d'un moteur d'aéronef, tel que dans la revendication 1.

Les pompes du circuit de carburant selon l'invention ont des lois de cylindrées différentes. En particulier, la première pompe a de préférence une capacité de pompage supérieure à celle de la seconde pompe. Ainsi, en fonction du point de fonctionnement du moteur, il est possible de commander l'organe de commutation pour que le débit de carburant délivré provienne soit des deux pompes, soit d'une seule d'entre elles (en l'occurrence, la seconde pompe). Par exemple, au démarrage du moteur qui nécessite un fort débit de carburant, l'organe de commutation peut être commandé pour que le débit de carburant délivré provienne des deux pompes. Pour les points de fonctionnement entre le ralenti et la croisière qui ne nécessitent pas un débit aussi élevé, l'organe de commutation est commandé pour que le débit de carburant délivré ne provienne que de la seconde pompe. Enfin, pour les points de fonctionnement au dessus du point de croisière, l'organe de commutation est commandé pour que le débit de carburant délivré provienne des deux pompes.

Par rapport aux solutions connues de l'art antérieur, le circuit de carburant selon l'invention présente ainsi de forts gains aussi bien sur la puissance thermique (le débit de carburant ayant été pressurisé au niveau haute pression et qui est recirculé est limité) que sur la puissance mécanique prélevée (le prélèvement mécanique ne travaillant pas pour le moteur peut être diminué).

De plus, ce circuit est simple à réaliser puisqu'il nécessite l'installation que d'un organe hydraulique de commutation et d'un organe électrique de pilotage. Il n'a aucun impact sur les autres composants du circuit de carburant, et en particulier sur la soupape de régulation et sur le doseur de carburant.

Le circuit de carburant selon l'invention présente également une grande souplesse d'utilisation. Notamment, pour les points de fonctionnement entre le ralenti et la croisière où une seule pompe est active, il est possible en cas de conditions givrantes (« icing ») nécessitant de chauffer le carburant de commander l'organe de commutation pour activer l'autre pompe. De même, en cas d'over speed, il est possible de commander électriquement la coupure de la première pompe afin de réduire le débit de carburant injecté à un régime correspondant à la croisière maximale.

Enfin, le circuit de carburant selon l'invention a pour avantage de pouvoir optimiser le point de dimensionnement de la cylindrée de la seconde pompe pour avoir le meilleur gain thermique et le gain de prélèvement mécanique.

De préférence, l'organe de commutation comprend un distributeur hydraulique ayant un orifice d'alimentation relié à la sortie de la première pompe, un orifice d'utilisation haute pression relié à la sortie de la seconde pompe, et un orifice d'utilisation basse pression relié à la ligne d'alimentation à basse pression par une conduite de recirculation de carburant, l'orifice d'alimentation pouvant être relié à l'orifice d'utilisation haute pression ou à l'orifice d'utilisation basse pression en fonction de la position commandée d'un tiroir du distributeur hydraulique afin de combiner les débits de sortie des deux pompes ou de décharger une partie ou l'ensemble du débit de sortie de la première pompe sur la ligne d'alimentation à basse pression.

L'organe électrique de pilotage peut comprendre une électrovanne placée sur une conduite de dérivation de carburant reliée d'une part sur la conduite de recirculation et d'autre part à l'une des chambres de pilotage du distributeur hydraulique. Dans ce cas, l'autre chambre de pilotage du distributeur hydraulique est reliée à la sortie de la seconde pompe, les chambres de pilotage du distributeur hydraulique communiquant entre elles au travers d'un diaphragme.

Alternativement, l'organe électrique de pilotage de l'organe de commutation peut comprendre une électrovanne placée sur la conduite de recirculation de carburant. Dans ce cas, l'électrovanne peut être du type tout ou rien ou du type à régulation du débit.

L'invention concerne également un moteur d'aéronef comportant un circuit d'alimentation en carburant tel que défini précédemment.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1 et 1A illustrent un premier mode de réalisation d'un circuit d'alimentation en carburant conforme à l'invention ; et
- les figures 2 et 2A illustrent un second mode de réalisation d'un circuit d'alimentation en carburant conforme à l'invention.

### Description détaillée de modes de réalisation

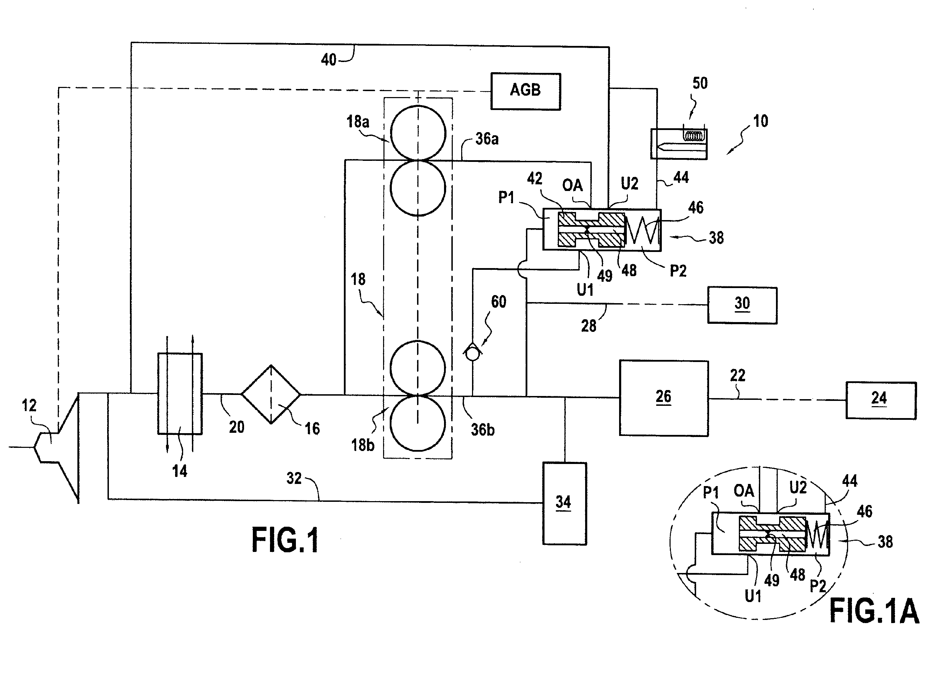

Un premier mode de réalisation d'un circuit d'alimentation en carburant conforme à l'invention est décrit ci-après en liaison avec les figures 1 et 1A dans le cadre d'une application à un moteur d'avion à turbine à gaz. Toutefois, le domaine d'application de l'invention s'étend à des moteurs à turbine à gaz d'autres aéronefs, notamment des hélicoptères et à des moteurs d'aéronefs autres qu'à turbine à gaz.

Le circuit d'alimentation en carburant 10 selon ce premier mode de réalisation de l'invention comporte, de façon connue en soi, une pompe basse pression 12, un échangeur thermique carburant/huile 14, un filtre principal à carburant 16 et un système de pompage haute pression 18 (la position de l'échangeur thermique 14 et du filtre 16 est illustrée à titre d'exemple ; ces éléments pourraient être positionnés de façon différente).

La pompe basse pression 12 est reliée en amont aux réservoirs de carburant de l'avion (non représentés) et en aval au système de pompage haute pression 18 par l'intermédiaire d'une ligne d'alimentation à basse pression 20.

A la sortie du système de pompage haute pression 18, le circuit d'alimentation en carburant 10 se divise en plusieurs lignes distinctes de carburant, à savoir : une ligne de carburant 22 pour l'alimentation en carburant d'injecteurs de chambre de combustion 24, le débit injecté vers ces injecteurs étant dosé de façon connue en soi par un doseur de carburant 26 ; une autre ligne de carburant 28 pour l'alimentation d'actionneurs de géométrie variable 30 du moteur ; et une ligne de recirculation de carburant 32 munie d'une soupape de régulation 34 pour renvoyer le débit de carburant non utilisé sur la ligne d'alimentation à basse pression 20.

Le système de pompage haute pression 18 est du type à deux étages, c'est-à-dire qu'il se compose de deux pompes volumétriques à engrenages 18a, 18b qui sont entraînées simultanément par le moteur selon des lois de cylindrée différentes. Plus précisément, la première pompe 18a présente une cylindrée plus élevée que celle de la seconde pompe 18b, c'est-à-dire qu'elle permet en fonctionnement d'injecter un débit de carburant plus important que celui injecté en fonctionnement par la seconde pompe. En d'autres termes, la première pompe 18a du système de pompage haute pression a une capacité de pompage supérieure à celle de la seconde pompe 18b.

La pompe basse pression 12, ainsi que les deux pompes 18a, 18b du système de pompage haute pression 18 sont entraînées simultanément par l'arbre haute pression du moteur via une boîte de transmission AGB (ou boîte de relais d'accessoires).

Selon l'invention, le circuit d'alimentation en carburant 10 comprend également un organe hydraulique de commutation qui est interposé entre les sorties respectives 36a, 36b des deux pompes 18a, 18b du système de pompage haute pression, ainsi qu'un organe électrique de pilotage de cet organe de commutation.

Dans le premier mode de réalisation des figures 1 et 1A, l'organe de commutation se présente sous la forme d'un distributeur hydraulique 38. Sous l'actionnement de l'organe électrique de pilotage, ce distributeur hydraulique 38 peut prendre deux positions différentes : une première position dans laquelle les sorties 36a, 36b des deux pompes 18a, 18b communiquent entre elles pour combiner leurs débits en vue de délivrer du carburant sous haute pression vers les injecteurs de chambre de combustion 24 et les actionneurs de géométries variables 30 (voir la figure 1), et une seconde position dans laquelle la sortie de la première pompe 18a communique avec une conduite de recirculation de carburant 40 pour décharger l'ensemble du débit de sortie de la pompe 18a vers la ligne d'alimentation à basse pression 20 (voir la figure 1A).

De façon plus précise, le distributeur hydraulique 38 comprend un orifice d'alimentation OA relié à la sortie 36a de la première pompe 18a, un orifice d'utilisation haute pression U1 relié à la sortie 36b de la seconde pompe 18b, et un orifice d'utilisation basse pression U2 relié à la conduite de recirculation de carburant 40.

Le distributeur 38 comprend également un tiroir 42 mobile en translation linéaire dans un cylindre sous l'actionnement de l'organe électrique de pilotage. La position de ce tiroir définit les deux positions précédemment décrites : dans la première position, l'orifice d'alimentation OA est relié à l'orifice d'utilisation haute pression U1 de sorte que les sorties 36a, 36b des deux pompes communiquent entre elles, et l'orifice d'utilisation basse pression U2 est masqué (figure 1) ; dans la seconde position, l'orifice d'alimentation OA communique avec l'orifice d'utilisation basse pression U2 pour permettre une recirculation du carburant vers la ligne d'alimentation à basse pression 20 via la conduite de recirculation 40, et l'orifice d'utilisation haute pression U1 est masqué (figure 1A).

Le distributeur 38 comprend également deux chambres de pilotage, à savoir : une première chambre de pilotage P1 reliée à la sortie 36b de la seconde pompe 18b, et une seconde chambre de pilotage P2 reliée à une conduite de dérivation 44 décrite ci-après et dans laquelle est placé un ressort 46. Par ailleurs, les chambres de pilotage P1, P2 communiquent entre elles au moyen d'un canal 48 traversant le tiroir 42 de part en part et dans lequel est monté un diaphragme 49.

L'organe électrique de pilotage du distributeur permet d'agir sur la pression appliquée dans la seconde chambre de pilotage P2, les pressions appliquées dans les chambres de pilotage P1, P2 agissant en opposition l'une de l'autre pour commander le déplacement du tiroir 42 du distributeur.

A cet effet, l'organe électrique de pilotage du distributeur comprend une électrovanne 50 (ou vanne à commande électrique) qui est placée sur la conduite de dérivation 44, celle-ci étant reliée d'une part à la conduite de recirculation de carburant 40 et d'autre part à la seconde chambre de pilotage P2 du distributeur.

Cette électrovanne 50 est du type « tout ou rien » : lorsqu'elle est commandée électriquement, l'électrovanne est ouverte et du carburant peut circuler dans la conduite de dérivation 44 entre la seconde chambre de pilotage P2 et la conduite de recirculation de carburant 40. En revanche, lorsqu'elle n'est pas commandée électriquement, l'électrovanne est fermée et aucun débit de carburant ne circule dans la conduite de dérivation. En variante de réalisation, l'électrovanne pourrait être du type à débit régulé.

Ainsi, lorsque l'électrovanne 50 n'est pas commandée, la pression à l'intérieur de la première chambre P1 est équivalente à la pression haute pression P_{HP} à la sortie 36b de la seconde pompe 18b. La conduite de dérivation 44 étant fermée, il règne dans la seconde chambre P2 une pression équivalente à la pression P_{HP} (cette chambre de pilotage P2 communique avec l'autre chambre de pilotage P1 via le canal 48) à laquelle s'ajoute la pression exercée par le ressort 46. Aussi, la force est supérieure dans la seconde chambre P2 et le tiroir 42 du distributeur se déplace dans la première position (cas de la figure 1 où les sorties des deux pompes communiquent entre elles).

Lorsque l'électrovanne 50 est commandée, la pression à l'intérieur de la première chambre P1 est toujours équivalente à la pression haute pression P_{HP}. La conduite de dérivation 44 étant à présent ouverte, il règne dans la seconde chambre P2 une pression équivalente à la pression P_{BP} régnant à la sortie de la pompe basse pression (cette chambre de pilotage P2 communique avec la ligne d'alimentation à basse pression 20 via la conduite de dérivation 40 et la conduite de recirculation 44) à laquelle s'ajoute la force exercée par le ressort 46. Aussi, la pression est supérieure dans la première chambre P1 et le tiroir 42 du distributeur se déplace dans la seconde position (cas de la figure 1A où le débit injecté par la première pompe est recirculé).

La commande de l'électrovanne 50 provient du calculateur moteur (appelé ECU pour Engine Control Unit) qui fournit une puissance électrique pour la commande de l'électrovanne.

Par ailleurs, il est possible d'imaginer des variantes de réalisation de ce premier mode de réalisation. En particulier, le tiroir du distributeur hydraulique et l'électrovanne pourraient être réunis dans un même composant.

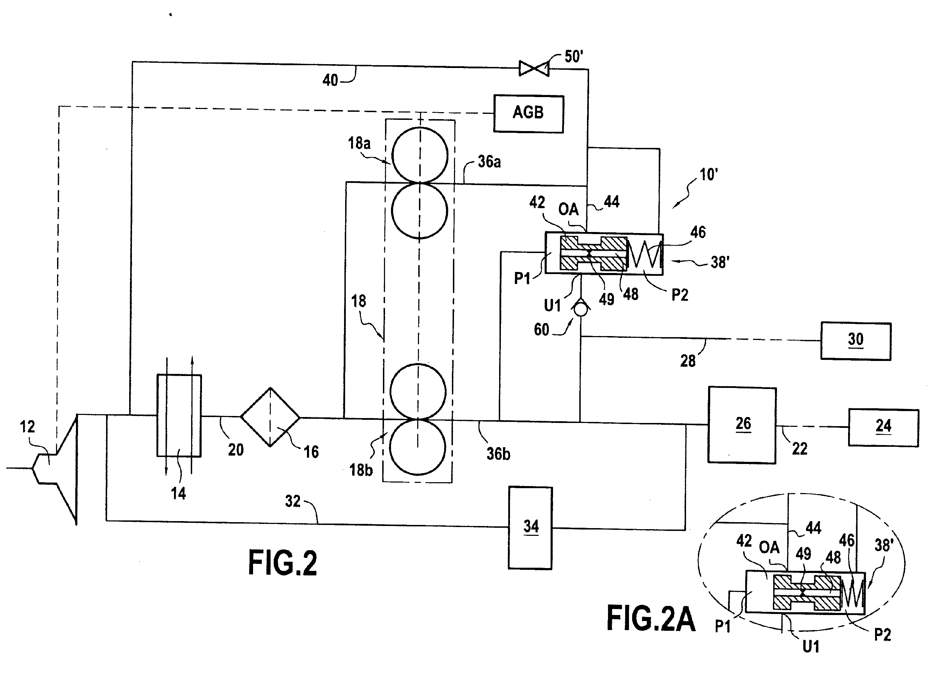

En liaison avec les figures 2 et 2A, on décrira maintenant un circuit d'alimentation en carburant 10' selon un second mode de réalisation de l'invention.

Ce circuit 10' diffère de celui du premier mode de réalisation notamment en ce que le distributeur hydraulique 38' comprend un orifice d'alimentation OA relié à la sortie 36a de la première pompe 18a et un seul orifice d'utilisation U1 relié à la sortie de la seconde pompe 18b.

De plus, l'organe électrique de pilotage de ce distributeur hydraulique 38' comprend une électrovanne 50' qui est placée directement sur la conduite de recirculation de carburant 40.

Par ailleurs, toujours par rapport au circuit du premier mode de réalisation, la première chambre de pilotage P1 du distributeur est reliée à la sortie 36b de la seconde pompe 18b, et la seconde chambre de pilotage P2 est reliée à la sortie 36a de la première pompe 18a.

Le fonctionnement du distributeur est alors le suivant. Au départ, la force du ressort 46 est réglée pour que le tiroir 42 du distributeur soit positionné pour faire communiquer l'orifice d'alimentation OA avec l'orifice d'utilisation haute pression U1 de sorte que les sorties des deux pompes communiquent entre elles. Ensuite, en fonction de la position de l'électrovanne 50', le fonctionnement est différent.

Lorsque l'électrovanne 50' n'est pas commandée (vanne fermée), la pression à l'intérieur de la seconde chambre P2 du distributeur est équivalente à la pression haute pression à la sortie 36a de la première pompe à laquelle s'ajoute la force du ressort 46. Il en résulte que le tiroir 42 du distributeur reste dans la position où l'orifice d'alimentation OA avec l'orifice d'utilisation haute pression U1 (cas de la figure 2).

Lorsque l'électrovanne 50' est commandée (vanne ouverte), la pression à l'intérieur de la première chambre P1 de la soupape est équivalente à la haute pression du carburant à la sortie 36b de la seconde pompe tandis que la seconde chambre P2 est reliée à la conduite de dérivation 40 (carburant à basse pression). Ainsi, le tiroir du distributeur se déplace dans la seconde position avec l'orifice d'alimentation OA et l'orifice d'utilisation haute pression U1 qui sont masqués (cas de la figure 2A où le débit injecté par la première pompe est recirculé par la conduite de recirculation de carburant 40).

Comme pour le premier mode de réalisation, l'électrovanne 50' est commandée par le calculateur moteur (appelé ECU pour Engine Control Unit) qui fournit une puissance électrique pour la commande de l'électrovanne.

Par ailleurs, l'électrovanne 50' peut être du type « tout ou rien » ou du type à régulation du débit. Dans ce dernier cas, le débit de carburant injecté par la première pompe 18a qui est recirculé peut ainsi être avantageusement régulé.

Par ailleurs, il est possible d'imaginer des variantes de réalisation de ce second mode de réalisation. En particulier, l'électrovanne pourrait être positionnée au niveau du noeud entre la sortie 36a de la première pompe 18a et la conduite de dérivation 44. Ainsi, il deviendrait possible d'enlever le tiroir du distributeur hydraulique, la fonction remplie par celui-ci étant réalisée en régulant la position de l'électrovanne (celle-ci aurait alors une entrée reliée à la sortie 36a de la première pompe et deux sorties, l'une reliée à la conduite de recirculation 40 et l'autre à la sortie 36b de la seconde pompe. En outre, la présence du diaphragme 49 dans le canal 48 traversant le tiroir 42 du distributeur n'est pas indispensable dans ce mode de réalisation.

De manière plus générale, certaines variantes s'appliquent aux deux modes de réalisation précédemment décrits.

En particulier, la conduite de recirculation de carburant 40 peut déboucher sur la ligne d'alimentation à basse pression 20, soit en amont de l'échangeur thermique 14 comme représenté sur les figures, soit entre l'échangeur thermique 14 et le filtre principal à carburant 16, soit en aval de ce filtre principal à carburant (en amont du partage entre les entrées des deux pompes 18a, 18b du système de pompage haute pression ou en amont de l'entrée de la première pompe 18a).

Par ailleurs, selon une disposition avantageuse de l'invention commune aux deux modes de réalisation, un clapet anti-retour 60 est positionné sur la ligne de carburant reliant l'orifice d'utilisation haute pression U1 du distributeur hydraulique 38, 38' à la sortie 36b de la seconde pompe 18b. Dans le mode de réalisation de la figure 2, ce clapet anti-retour 60 doit être situé entre la ligne de carburant 28 pour l'alimentation des actionneurs de géométrie variable et l'orifice d'utilisation haute pression U1. Dans ce cas, ce clapet anti-retour permet ainsi d'éviter les débits parasites vers la ligne basse pression via la conduite de recirculation de carburant 40 lors de commutations.

## Revendications

1. Circuit d'alimentation en carburant (10, 10') d'un moteur d'aéronef, comportant un système de pompage haute pression (18) pour délivrer en sortie du carburant sous haute pression vers des injecteurs de chambre de combustion (24) à partir d'une ligne d'alimentation à basse pression (20), le système de pompage haute pression ayant une première et une seconde pompes volumétriques à engrenages (18a, 18b) entraînées simultanément par le moteur,
caractérisé en qu'il comprend en outre :
un organe hydraulique de commutation (38, 38') interposé entre les sorties (36a, 36b) respectives des pompes et comprenant un distributeur hydraulique (38, 38') ayant un orifice d'alimentation (OA) relié à la sortie (36a) de la première pompe (18a), un orifice d'utilisation haute pression (U1) relié à la sortie (36b) de la seconde pompe (18b), et un orifice d'utilisation basse pression (U2) relié à la ligne d'alimentation à basse pression (20) par une conduite de recirculation de carburant (40), l'orifice d'alimentation pouvant être relié, dans un état, à l'orifice d'utilisation haute pression et, dans un autre état, à l'orifice d'utilisation basse pression en fonction de la position commandée d'un tiroir (42) du distributeur hydraulique afin de combiner les débits de sortie des deux pompes ou de décharger une partie ou l'ensemble du débit de sortie de la première pompe sur la ligne d'alimentation à basse pression ; et
un organe électrique de pilotage (50, 50') de l'organe hydraulique de commutation pour le faire passer d'un état à l'autre.

2. Circuit selon la revendication 1, caractérisé en que l'organe électrique de pilotage comprend une électrovanne (50) placée sur une conduite de dérivation de carburant (44) reliée d'une part sur la conduite de recirculation (40) et d'autre part à l'une des chambres de pilotage (P2) du distributeur hydraulique.

3. Circuit selon la revendication 2, **caractérisé en ce que** l'autre chambre de pilotage (P1) du distributeur hydraulique est reliée à la sortie (36b) de la seconde pompe (18b), les chambres de pilotage (P1, P2) du distributeur hydraulique communiquant entre elles au travers d'un diaphragme (49).

4. Circuit selon la revendication 1, caractérisé en que l'organe électrique de pilotage de l'organe de commutation comprend une électrovanne (50') placée sur la conduite de recirculation de carburant (40).

5. Circuit selon la revendication 4, caractérisé en que l'électrovanne (50') du type tout ou rien.

6. Circuit selon la revendication 4, caractérisé en que l'électrovanne (50') est du type à régulation du débit.

7. Circuit selon l'une quelconque des revendications 1 à 6, **caractérisé en ce qu'**un clapet anti-retour (60) est positionné entre l'orifice d'utilisation haute pression (U1) du distributeur hydraulique (38, 38') et la sortie (36b) de la seconde pompe (18b).

8. Circuit selon l'une quelconque des revendications 1 à 7, **caractérisé en ce que** la première pompe (18a) a une capacité de pompage supérieure à celle de la seconde pompe (18b).

9. Moteur d'aéronef comportant un circuit d'alimentation en carburant (10, 10') selon l'une quelconque des revendications 1 à 8.

## Patentansprüche

1. Treibstoffzuführkreis (10, 10') eines Flugzeugtriebwerks, umfassend ein Hochdruckpumpsystem (18), um ausgangseitig Treibstoff unter hohem Druck mittels einer Niederdruckversorgungsleitung (20) an Brennkammereinspritzdüsen (24) zu liefern, wobei das Hochdruckpumpsystem eine erste und eine zweite volumetrische Zahnradpumpe (18a, 18b), die durch das Triebwerk gleichzeitig angetrieben werden, umfaßt,
**dadurch gekennzeichnet, daß** er ferner umfaßt:
ein hydraulisches Schaltorgan (38, 38'), das zwischen den jeweiligen Ausgängen (36a, 36b) der Pumpen zwischengeschaltet ist und einen Hydraulikverteiler (38, 38') umfaßt, der eine Zuführöffnung (OA), welche mit dem Ausgang (36a) der ersten Pumpe (18a) verbunden ist, eine Hochdrucknutzungsöffnung (U1), welche mit dem Ausgang (36b) der zweiten Pumpe (18b) verbunden ist, und eine Niederdrucknutzungsöffnung (U2), welche über eine Treibstoffrückführleitung (40) mit der Niederdruckversorgungsleitung (20) verbunden ist, aufweist, wobei die Zuführöffnung, in Abhängigkeit von der gesteuerten Position eines Schiebers (42) des Hydraulikverteilers, in einem Zustand mit der Hochdrucknutzungsöffnung und in einem anderen Zustand mit der Niederdrucknutzungsöffnung verbunden werden kann, um die Ausgangsliefermengen der beiden Pumpen zu kombinieren oder um einen Teil der oder die gesamte Ausgangsliefermenge der ersten Pumpe auf die Niederdruckversorgungsleitung zu entladen, sowie
ein elektrisches Steuerorgan (50, 50') des hydraulischen Schaltorgans, um es von einem Zustand in den anderen übergehen zu lassen.

2. Kreis nach Anspruch 1, **dadurch gekennzeichnet, daß** das elektrische Steuerorgan ein Elektroventil (50) umfaßt, das an einer Treibstoffzweigleitung (44) angeordnet ist, welche einerseits mit der Rückführleitung (40) und andererseits mit einer der Steuerkammern (P2) des Hydraulikverteilers verbunden ist.

3. Kreis nach Anspruch 2, **dadurch gekennzeichnet, daß** die andere Steuerkammer (P1) des Hydraulikverteilers mit dem Ausgang (36b) der zweiten Pumpe (18b) verbunden ist, wobei die Steuerkammern (P1, P2) des Hydraulikverteilers durch eine Drossel (49) miteinander in Verbindung stehen.

4. Kreis nach Anspruch 1, **dadurch gekennzeichnet, daß** das elektrische Steuerorgan des Schaltorgans ein Elektroventil (50'), das an der Treibstoffrückführleitung (40) angeordnet ist, umfaßt.

5. Kreis nach Anspruch 4, **dadurch gekennzeichnet, daß** das Elektroventil (50') vom Typ Alles-oder-Nichts ist.

6. Kreis nach Anspruch 4, **dadurch gekennzeichnet, daß** das Elektroventil (50') vom Typ mit Durchsatzregelung ist.

7. Kreis nach einem der Ansprüche 1 bis 6, **dadurch gekennzeichnet, daß** ein Rückschlagventil (60) zwischen der Hochdrucknutzungsöffnung (U1) des Hydraulikverteilers (38, 38') und dem Ausgang (36b) der zweiten Pumpe (18b) angeordnet ist.

8. Kreis nach einem der Ansprüche 1 bis 7, **dadurch gekennzeichnet, daß** die erste Pumpe (18a) eine größere Pumpkapazität als die zweite Pumpe (18b) aufweist.

9. Flugzeugtriebwerk, umfassend einen Treibstoffzuführkreis (10, 10') nach einem der Ansprüche 1 bis 8.

## Claims

1. A fuel feed circuit (10, 10') for an aeroengine, the circuit comprising a high-pressure pumping system (18) for delivering fuel at high pressure to combustion chamber injectors (24) from a low-pressure feed line (20), the high-pressure pumping system having first and second positive displacement gear pumps (18a, 18b) driven simultaneously by the engine,
the fuel feed circuit being **characterized in that** it further comprises:
a hydraulic switch member (38, 38') interposed between the respective outlets (36a, 36b) of the pumps and comprising a hydraulic directional control valve (38, 38') having a feed orifice (OA) connected to the outlet (36a) of the first pump (18a), a high-pressure delivery orifice (U1) connected to the outlet (36b) of the second pump (18b), and a low-pressure delivery orifice (U2) connected to the low-pressure feed line (20) by a fuel return pipe (40), the feed orifice being capable of being connected, in one state, to the high-pressure delivery orifice, and in another state, to the low-pressure delivery orifice, as a function of the controlled position of a slide (42) of the hydraulic valve in order to combine the outlet flows from the two pumps or else in order to discharge some or all of the outlet flow from the first pump to the low-pressure feed line; and
an electrical control member (50, 50') for controlling the hydraulic switch member in order to cause it to pass from one state to the other.

2. A circuit according to claim 1, **characterized in that** the electrical control member comprises a solenoid valve (50) placed on a fuel branch pipe (44) connected firstly to the return pipe (40) and secondly to one of the pilot chambers (P2) of the hydraulic valve.

3. A circuit according to claim 2, **characterized in that** the other pilot chamber (P1) of the hydraulic valve is connected to the outlet (36b) of the second pump (18b), the pilot chambers (P1, P2) of the hydraulic valve communicating with each other through a diaphragm (49).

4. A circuit according to claim 1, **characterized in that** the electrical member for controlling the switch member comprises a solenoid valve (50') placed on the fuel return pipe (40) .

5. A circuit according to claim 4, **characterized in that** the solenoid valve (50') is of the on/off type.

6. A circuit according to claim 4, **characterized in that** the solenoid valve (50') is of the flow rate regulator type.

7. A circuit according to any one of claims 1 to 6, **characterized in that** a check valve (60) is positioned between the high-pressure delivery orifice (U1) of the hydraulic valve (38, 38') and the outlet (36b) of the second pump (18b).

8. A circuit according to any one of claims 1 to 7, **characterized in that** the first pump (18a) has pumping capacity greater than that of the second pump (18b).

9. An aeroengine including a fuel feed circuit (10, 10') according to any one of claims 1 to 8.
